# EUROPEAN PATENT APPLICATION

(11) **EP 1 020 409 A1**
(43) Date of publication of application: **19.07.2000**
(21) Application number: 99650003.9
(22) Date of filing: 15.01.1999
(51) Int. Cl.: C02F 3/30, C02F 3/12

(54) **A sewage treatment system**

(71) Applicant: The Plastics Development Centre Limited, Newry, County Down (GB)
(72) Inventor: Gregg, Desmond, Lurgan, Craigavon, County Armagh (GB); Burt, David, Bishop's Stortford, Hertfordshire (GB)
(74) Representative: Schütte, Gearoid

(57) **Abstract**

A sewage treatment system (1) comprises an anaerobic chamber (2) and an associated aerobic chamber (3) which forms an annular heat insulating jacket about the anaerobic chamber (2). Raw sewage is delivered into the anaerobic chamber (2) for anaerobic treatment prior to discharge of treated liquor to the aerobic chamber (3) for aerobic treatment prior to discharge through an outlet (12). An aerator (10) at an inlet of the aeration chamber (3) aerates the sewage liquor which then passes along a tortuous path, defined by baffles comprising overweirs (18, 19) and underweirs (20, 21), before discharge through the outlet (12).

## Description

This invention relates to a sewage treatment system.

The invention is particularly concerned with the treatment of domestic effluent. Where a dwelling is not connected to a mains sewage system typically a conventional septic tank system is used to treat domestic effluent. These have varying degrees of success depending on the particular design.

It is an object of the present invention to provide an improved sewage treatment system for the treatment of effluent.

### Statements of Invention

According to the invention, there is provided a sewage treatment system comprising an anaerobic chamber and an associated aerobic chamber, the anaerobic chamber having a raw sewage inlet and a sewage liquor outlet, the aerobic chamber having a sewage liquor inlet communicating with the sewage liquor outlet of the anaerobic chamber and a treated liquor outlet, characterised in that the aerobic chamber surrounds at least that portion of the anaerobic chamber in which anaerobic digestion of the raw sewage occurs. Thus, advantageously the aerobic chamber forms a thermal insulation jacket about the anaerobic chamber to maintain good anaerobic digestion conditions in the anaerobic chamber.

In a particularly preferred embodiment, the aerobic chamber has a series of baffles mounted between the inlet and the outlet of the aerobic chamber to direct the liquor along a tortuous flow path between the inlet and the outlet of the aerobic chamber. This gives an extended liquor flow path through the aerobic chamber for improved aerobic treatment. Also any short circuit of liquor between the inlet and outlet is prevented for improved treatment results.

In a preferred embodiment, the inlet and the outlet of the aerobic chamber are located at opposite sides of the aerobic chamber and two sets of baffles are provided arranged between the inlet and the outlet at opposite sides of the aerobic chamber to define two liquid flow paths between the inlet and the outlet extending around opposite sides of the anaerobic chamber. This is a useful feature in that even if the chambers are not mounted perfectly upright in the ground when installing the system, the system will automatically compensate for this which will not adversely effect the flow through the aerobic chamber with any flow decrease along one flow path being taken up by an increase in flow along the other flow path.

In another embodiment, for the or each flow path the baffles form at least one over weir downstream of the aerobic chamber inlet followed by an under weir downstream of the over weir.

In a further embodiment, the or each under weir has a notch or groove in a lower edge of the under weir. This assists in preventing sediment clogging the under weir.

In a further embodiment each over weir has a top edge located below the outlet of the aerobic chamber. This provides for a smooth flow of liquor across the over weir which is a broad crested weir.

In another embodiment an aerator is mounted in the aeration chamber adjacent the inlet to the aeration chamber. Preferably the aerator is mounted at a bottom of the aeration chamber below the inlet and is operable to deliver a stream of bubbles upwardly across the inlet. This advantageously ensures good aeration of new liquor as it enters the aeration chamber.

Preferably the aerator is operable to discharge bubbles in the size range 7 - 15 micro metres into the aeration chamber, and most preferably the bubbles are sized in the range 10 - 12 micro metres. This has been found to provide good aeration of the liquor. If the bubbles are too large there will be incomplete aeration and also it tends to blow away material.

In a further embodiment a lower end of the anaerobic chamber has inwardly and downwardly sloping side walls. In a particularly preferred embodiment the anaerobic chamber has a hemispherical lower end. This advantageously discourages sludge material from clinging to the sides of the anaerobic chamber and encourages the sludge material to slide downwardly to form a compact sludge mass at the base of the anaerobic chamber for promoting good anaerobic digestion. Other arrangements may also be possible, for example, a conical base or even a flat base if required.

In another embodiment the outlet of the anaerobic chamber is provided intermediate a top and a bottom of the anaerobic chamber, in use the outlet being located below the surface of liquor in the anaerobic chamber, and a non-return valve is mounted between the outlet of the anaerobic chamber and the inlet of the aerobic chamber. This non-return valve is particularly useful in controlling surges of material through the system.

Preferably the non-return valve is a resiliently deflectable flap valve operable to open when the liquor level in the anaerobic chamber rises above a desired level.

The air stream generated by the aerator as it passes the flap valve may tend to cause the flap valve to open. To avoid this preferably a bubble deflector shroud is mounted at an outlet of the valve extending into the aerobic chamber, at least at an underside of the valve above the aerator, to space the stream of air bubbles discharged from the aerator a pre-set distance away from the valve so that it does not adversely effect operation of the flap valve.

In another embodiment the raw sewage inlet discharges centrally within the anaerobic chamber to help promote an even distribution of the raw sewage material in the anaerobic chamber.

In a further embodiment the system comprises an outer housing within which is mounted an inner housing forming the anaerobic chamber, an annular ring between the inner housing and outer housing forming the aerobic chamber.

Preferably the annular ring is subdivided into four compartments by a pair of tank inserts, namely a inlet tank and an outlet tank , mounted at opposite sides of the aerobic chamber about the inlet and the outlet respectively leaving voids between the two tanks at opposite sides of the anaerobic chamber, end walls of the inlet tank forming over weirs, and end walls of the outlet tank forming under weirs. This construction is particularly advantageous because of its simplicity and it lends itself to manufacture of the housings from plastics material.

### Detailed Description of the Invention

The invention will be more clearly understood by the following description of some embodiments thereof, given by way of example only, with reference to the accompanying drawings, in which:

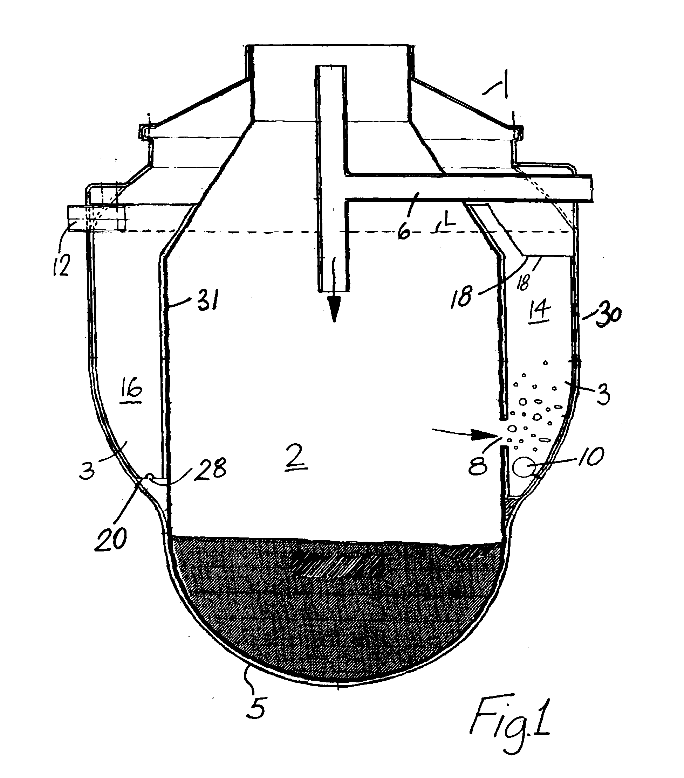

Fig. 1 is a schematic sectional elevational view of a sewage treatment system according to the invention;

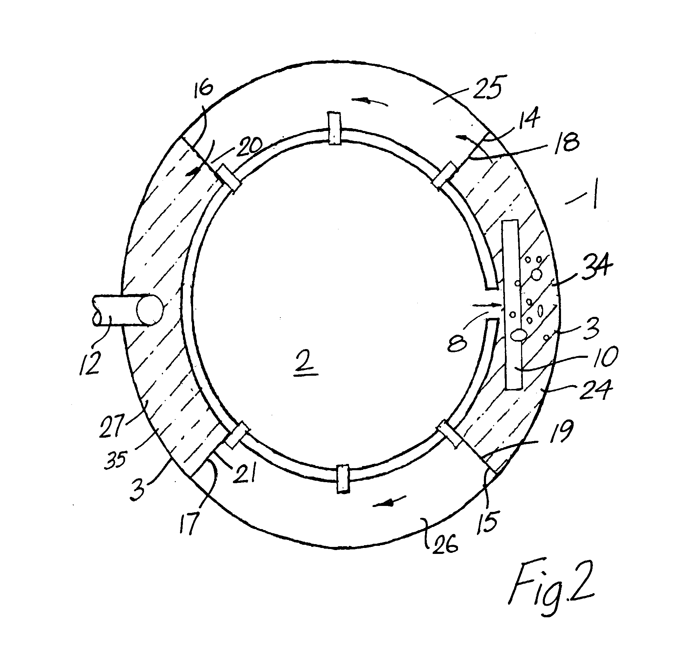

Fig. 2 is a schematic sectional plan view of the sewage treatment system;
Fig. 3 is a sectional elevational view of the sewage treatment system;

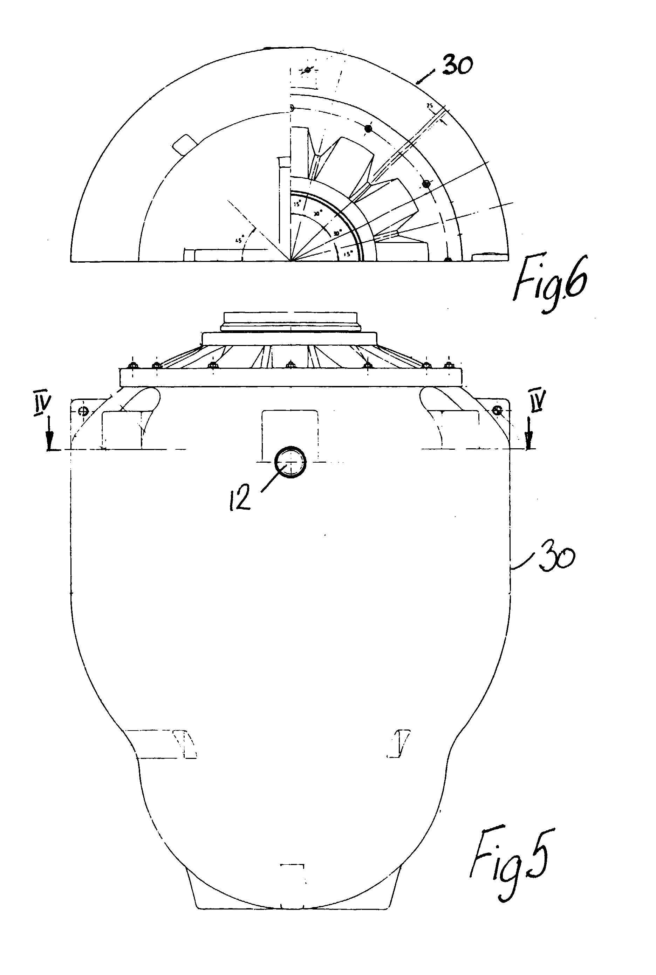

Fig. 4 is a partially sectioned plan view taken along the line IV-IV of Fig. 5;
Fig. 5 is an elevational view of the sewage treatment system;
Fig. 6 is a partial plan view and partial underneath plan view of the sewage treatment system;
Fig. 7 is a detail sectional elevational view of a flap valve assembly forming portion of the system;
Fig. 8 is a detail sectional view of portion of the system;
Fig. 9 is a detail sectional view taken along the line IX-IX of Fig. 4 showing an aerobic chamber inlet tank portion of the system;
Fig. 10 is a detail sectional view of an aerobic chamber outlet tank portion of the system;
Fig. 11 is a detail sectional elevational view of portion of the system; and
Fig. 12 is a detail sectional view taken along the line XII-XII of Fig. 4.

Referring to the drawings, there is illustrated a sewage treatment system according to the invention and indicated generally by the reference numeral 1. The system comprises an anaerobic chamber 2 and an associated aerobic chamber 3 which forms an insulating jacket around an upper portion of the anaerobic chamber 2. Raw sewage is delivered into the anaerobic chamber 2 for anaerobic treatment prior to discharge to the aerobic chamber 3 within which it is aerobically treated prior to discharge into a sewage system, soakaway or the like.

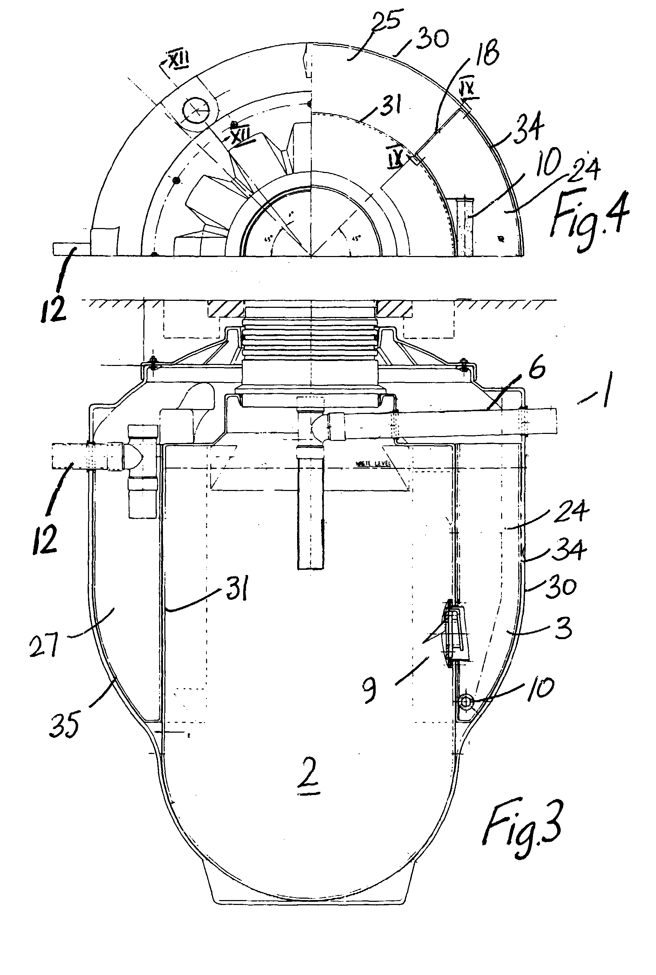

The anaerobic chamber 2 is generally cylindrical having a hemispherical bottom 5. A raw sewage inlet pipe 6 projects into an upper portion of the anaerobic chamber 2 for discharge of raw sewage centrally into the anaerobic chamber 2. An outlet opening 8 in a side wall 9 of the anaerobic chamber 2 allows discharge of anaerobically treated sewage liquor into the aerobic chamber 3. A non-return valve 9 (Fig. 3) is mounted at the outlet 8 to prevent back flow of the liquor from the aerobic chamber 3.

The aerobic chamber 3 forms an annular jacket about the anaerobic chamber 2 above the hemispherical bottom 5. Mounted within the aerobic chamber 3 below the outlet 8, which also forms an inlet to the aerobic chamber 3, is an aerator or air diffuser 10 for bubbling air up through the aerobic chamber 3 past the opening 8 for aerating the sewage liquor immediately as it enters the aerobic chamber 3. The sewage liquor passes between the inlet 8 and an outlet 12 on an opposite side of the aerobic chamber 3 along a tortuous aerobic treatment path defined by spaced-apart baffles 14, 15,16,17. These baffles 14,15,16,17 define over weirs 18,19 immediately downstream of the inlet 8 followed by associated under weirs 20,21 downstream of the over weirs 18,19. In this way, the sewage liquor rises up through an inlet portion 24, then passes down through intermediate portions 25,26 and then up through an outlet portion 27 of the aeration chamber 3 to the outlet 12. Each over weir 18,19 is submerged, a top edge of the over weir 18,19 being about 25mm below the outlet 12, allowing balanced flow in either direction. It will be noted that the sewage liquor passes around opposite sides of the anaerobic chamber 2 to the outlet 12. Each under weir 20,21 has a central notch 28 to promote flow and prevent blockage at the under weir 20,21.

It will be noted that the apparatus 1 is of relatively simple construction essentially comprising an outer housing 30 within which is mounted an inner housing 31 forming the anaerobic chamber 2, an annular ring between the inner housing 31 and outer housing 30 forming the aerobic chamber 3. The aerobic chamber 3 is subdivided into four compartments by a pair of tank inserts, namely an inlet tank 34 and an outlet tank 35 mounted within the outer housing 30 at opposite sides of the aerobic chamber 3 about the inlet 8 and outlet 12 respectively leaving voids forming the intermediate portions 25,26 between the two tanks 34,35 at opposite sides of the anaerobic chamber 2. End walls of the inlet tank 34 form the over weirs 18 and similarly end walls of the outlet tank 35 form the under weirs 20,21.

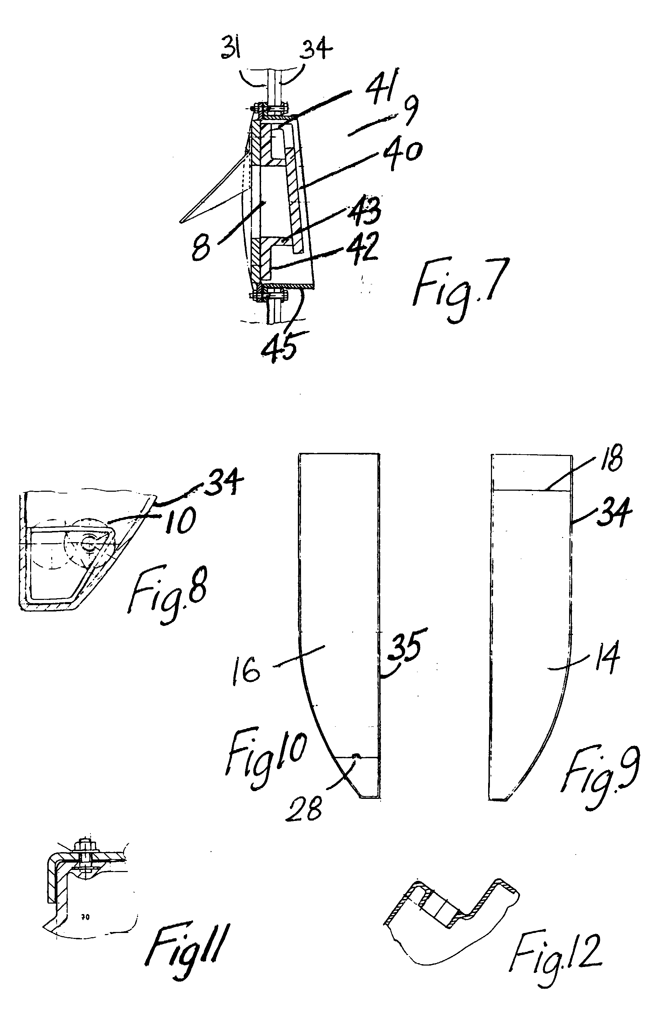

The flap valve 9 is shown in more detail in Fig. 7, and essentially comprises a plastics flap 40 having a hinged upper end 41 mounted on a flange 42 at the opening 8. The flap 40 engages against a pipe 43 projecting outwardly from the flange 42 to define the opening 8. A bubble deflector shroud 45 is mounted about the valve 9 and projects outwardly of the flap 40 to space the stream of air bubbles from the aerator 10 away from the valve 40 to prevent any undesirable opening of the flap 40.

In use, raw sewage is discharged into the anaerobic chamber 2 within which it is anaerobically treated with solids settling at the bottom 5 of the anaerobic chamber 2. It will be noted that the sloped hemispherical sides of the bottom 5 tends to cause solid material in the sewage to slip downwardly to form an evenly compacted sludge and create a generally flat top sludge surface. This feature increases the void pressure in the sludge and also the insulation provided by the aeration chamber 3 helps retain heat generated during anaerobic digestion to promote an optimum anaerobic treatment rate. A level L of liquid is maintained in the system 1. As more sewage enters the anaerobic chamber 2 a similar volume of sewage liquor is discharged to the aerobic chamber 3. Sewage liquor is discharged from the anaerobic chamber 2 into the aerobic chamber 3 where it is aerated and delivered in a tortuous path around the baffles to the outlet 12 to maximise the aeration of the sewage liquor prior to discharge through the outlet 12.

The invention is not limited to the embodiment hereinbefore described which may be varied in both construction, size and detail within the scope of the appended claims.

## Claims

1. A sewage treatment system comprising an anaerobic chamber and an associated aerobic chamber, the anaerobic chamber having a raw sewage inlet and a sewage liquor outlet, the aerobic chamber having a sewage liquor inlet communicating with the sewage liquor outlet of the anaerobic chamber and a treated liquor outlet, characterised in that the aerobic chamber surrounds at least portion of the anaerobic chamber in which anaerobic digestion of the raw sewage occurs.

2. A sewage treatment system as claimed in claim 1 or 2, wherein the aerobic chamber has a series of baffles mounted between the inlet and outlet of the aerobic chamber to direct the liquor along a tortuous flow path between the inlet and the outlet of the aerobic chamber.

3. A sewage treatment system as claimed in any preceding claim, wherein the inlet and the outlet of the aerobic chamber are located at opposite sides of the aerobic chamber and two sets of baffles are provided arranged between the inlet and the outlet at opposite sides of the aerobic chamber to define two liquid flow paths between the inlet and the outlet extending around opposite sides of the anaerobic chamber.

4. A sewage treatment system as claimed in claim 2 or 3 wherein for the or each flow path the aerobic chamber baffles comprise at least one over weir downstream of the inlet followed by an under weir downstream of the over weir.

5. A sewage treatment system as claimed in claim 4, wherein each under weir has a notch or groove in a lower edge of the under weir.

6. A sewage treatment system as claimed in claim 4 or 5, wherein each over weir has a top edge located below the outlet of the aerobic chamber.

7. A sewage treatment system as claimed in any preceding claim, wherein an aerator is mounted in the aeration chamber adjacent the inlet to the aeration chamber.

8. A sewage treatment system as claimed in claim 7, wherein the aerator is mounted at a bottom of the aeration chamber below the inlet and is operable to deliver a stream of bubbles upwardly across the inlet.

9. A sewage treatment system as claimed in any preceding claim, wherein a lower end of the anaerobic chamber has inwardly and downwardly sloping side walls.

10. A sewage treatment system as claimed in claim 9, wherein the anaerobic chamber has a hemispherical lower end.

11. A sewage treatment system as claimed in any preceding claim, wherein the outlet of the anaerobic chamber is provided intermediate a top and a bottom of the anaerobic chamber, in use the outlet being located below the surface of liquor in the anaerobic chamber, and a non-return valve is mounted between the outlet of the anaerobic chamber and the inlet of the aerobic chamber.

12. A sewage treatment system as claimed in claim 11, wherein the non-return valve is a resiliently deflectable flap valve operable to open when the liquor level in the anaerobic chamber rises above a desired level.

13. A sewage treatment system as claimed in claim 11 or 12, wherein a bubble deflector shroud is mounted at an outlet of the valve extending into the aerobic chamber at least at an underside of the valve above the aerator to space the stream of air bubbles discharged from the aerator a pre-set distance away from the valve.

14. A sewage treatment system as claimed in any preceding claim comprising an outer housing within which is mounted an inner housing forming the anaerobic chamber, an annular ring between the inner housing and outer housing forming the aerobic chamber.

15. A sewage treatment system as claimed in claim 14, wherein said annular ring is subdivided into four compartments by a pair of tank inserts, namely an inlet tank and an outlet tank mounted at opposite sides of the aerobic chamber about the inlet and outlet respectively leaving voids between the two tanks at opposite sides of the anaerobic chamber, end walls of the inlet tank forming over weirs and end walls of the outlet tank forming under weirs.
